# EUROPEAN PATENT APPLICATION

(11) **EP 0 994 407 A2**
(43) Date of publication of application: **19.04.2000**
(21) Application number: 99308164.5
(22) Date of filing: 15.10.1999
(51) Int. Cl.: G06F 3/023

(54) **Computer user interface**

(30) Priority: 16.10.1998 KR 9843761
(71) Applicant: Samsung Electronics Co., Ltd., Suwon, Kyungi-do (KR)
(72) Inventor: Baik, Sung-Shik 108-705 Poongrim Apt.664, Kyunggi-do (KR); Park, Kwang-chul, Sungdong-ku, Seoul (KR); Kim, Han-Suk, Kwonsun-ku, Suwon, Kyunggi-do (KR)
(74) Representative: Tunstall, Christopher Stephen

(57) **Abstract**

A computer user interface of this invention is a special interface for executing an application program, and includes a program selection button and a shell program for executing an application program corresponding to a press of the program shell button. A user can select and execute an application program registered in the shell program by means of the program selection button. In particular, the user can register an application program which can be selected by the program selection button in a program shell, thereby enabling a using environment to be fitted for the user. Since an audio player can be easily controlled by the program selection button, the user need not perform vexatious input steps for controlling the audio player using a keyboard device or a mouse.

## Description

### BACKGROUND TO THE INVENTION

The present invention relates to a computer system and, more particularly, to a computer with an improved computer user interface.

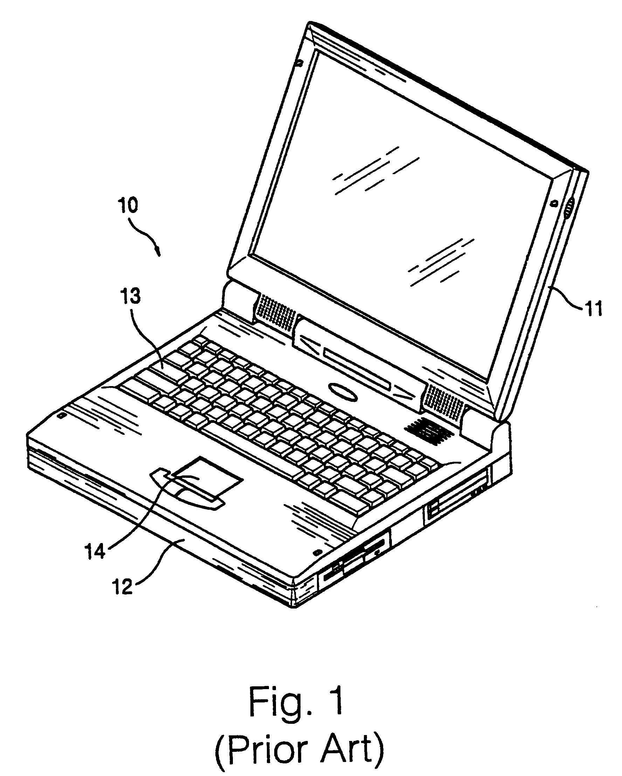

Fig. 1 illustrates an example of a conventional portable computer. It comprises a computer body 12 and a display panel 11 hinged to the body 12. The computer body 12 includes a keyboard device 13 and a pointing device 14. Thus, the user interface devices of the computer system 10 are the keyboard device 13, pointing device 14 and the display panel 11.

Most operating systems currently installed on computer systems use a GUI (graphic user interface). For example, Microsoft Windows 95 uses two methods to execute an application program, as follows:
(1) a user selects an icon by means of a keyboard device and a pointing device, so that an application program can be executed; and
(2) a user selects an application program by means of Windows Explorer, so that the application can be executed.

Since an operating system adopting a GUI can display an icon corresponding to each application program on a screen, the user can conveniently execute the corresponding application program.

When a large number of application programs are installed on a computer system, the desktop becomes cluttered with multiple icons. The user can set the computer system not to display an icon corresponding to an application program on screen. However, this makes it difficult for a novice user to select and execute the application programs, by means of a keyboard device or a pointing device, one by one.

To remedy the foregoing drawback, current computer systems are provided with a so-called "easy button" for convenient execution of a specific program. Easy buttons are located on the outside of the computer body, so that an application program can be executed when a user just presses the button. In a computer system having a remote control function, the easy buttons may be mounted on a remote control device. Since each of the easy buttons corresponds to a specific program, the corresponding program can be executed and terminated by means of the easy buttons.

The number of easy buttons is quite limited, in spite of this convenience. Also, since computer system makers set the relationships between the easy buttons and the application programs, the user cannot change the relationship. Although it is possible in theory to provide a large number of easy buttons corresponding to the application programs, these buttons lead to inconvenience and inefficiency, as it results in a cluttered computer body as opposed to a cluttered desktop.

### SUMMARY OF THE INVENTION

It is therefore an object of the present invention to provide a computer user interface which can conveniently drive application programs installed on a computer system.

Accordingly, the present invention provides a computer comprising a display, a plurality of input buttons and control means adapted as follows:
in response to a first operation of the input buttons, to display on the display a menu including a plurality of entries; and
to navigate amongst the entries to select a desired entry and to initiate processing of the selected entry in response to a further operation of the input buttons.

The menu may be displayed by opening a display window in the which the plurality of entries is displayed.

The present invention further provides a computer program which, when run on a suitable computer comprising a display and a plurality of input buttons, causes the computer to operate as follows:
to display on the display a menu including a plurality of entries in response to a first operation of the input buttons; and
to navigate amongst the entries to select a desired entry and to initiate processing of the selected entry in response to a further operation of the input buttons.

### BRIEF DESCRIPTION OF THE DRAWINGS

The present invention will now be described by way of example with reference to the accompanying drawings in which:
Fig. 1 is a perspective view of an example of a conventional portable computer;
Fig. 2 is a perspective view of an example of a portable computer according to the invention;
Fig. 3 is an enlarged perspective view showing the smarts buttons shown in Fig. 2;
Fig 4 is a block diagram depicting the system layer of a computer system shown in Fig. 2;
Fig. 5 is a flow chart showing the operation of a smart shell shown in Fig. 4;
Figs. 6A-6B illustrate a smart shell window of a computer user interface;
Figs. 7A-7B illustrates a mode display icon for dividing a smart shell mode into an audio mode, displayed in a taskbar notification area;
Figs. 8A-8B illustrates an example of a window of an audio player supporting smart buttons; and
Fig. 9 illustrates an example of an audio album subwindow for an audio player.

### DETAILED DESCRIPTION OF PREFERRED EMBODIMENTS

A computer user interface of the present invention is a special interface for executing application programs, and includes program selection buttons and shell programs executing an application program in response to depressions of a program selection button. The user can select and execute an application program registered in the shell program by means of the program selection button.

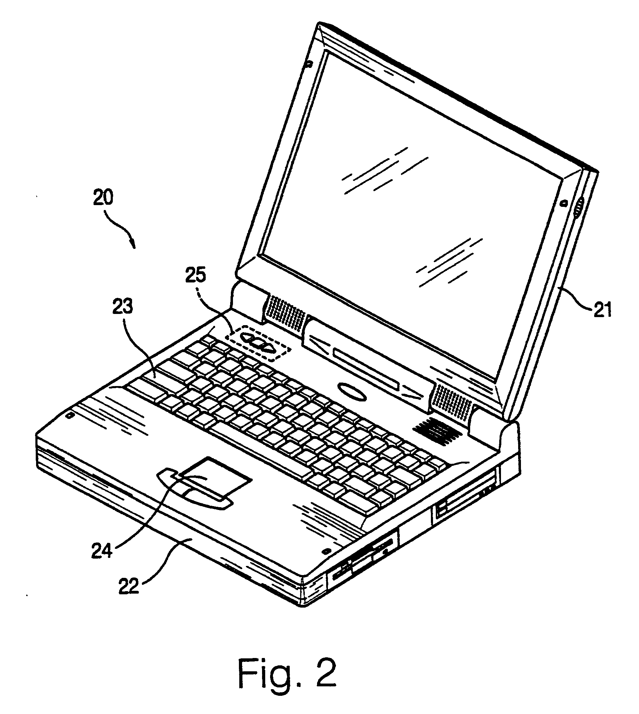

Fig. 2 illustrates an example of a portable computer according to the invention. Referring to Fig. 2, the portable computer system 20 comprises a body 22 and a display panel 21 hinge-connected to the body 22. A keyboard device 23, a pointing device 24, and a program selection button 25 are mounted upon the body 22. Microsoft Windows 95 is installed in the portable computer system 20.

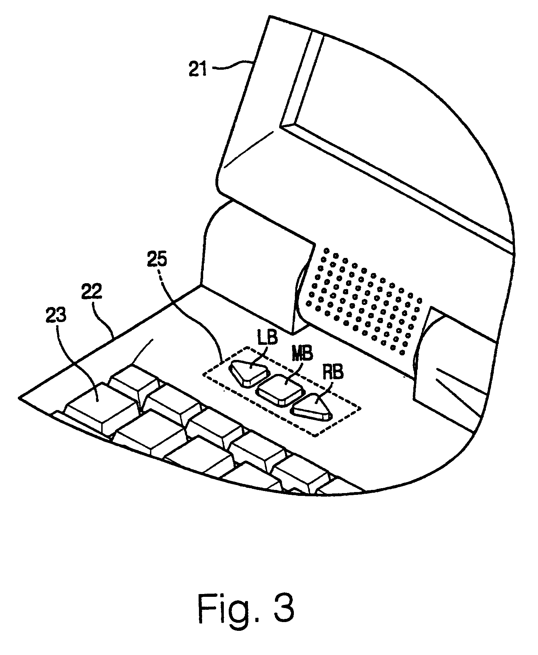

Fig. 3 is an enlarged illustration of the smart buttons shown in Fig. 2. Referring to Fig. 3, the program selection button 25 comprises a left button LB, a middle button MB, and a right button RB. Basically, a user uses the smart button 25 so as to select and execute a program. The left button LB and the right button RB are used to select an application program and the middle button MB is used to execute the application program. The smart button 25 is also used to select a menu of an application program supporting the smart button 25 and to execute the selected menu. The user can conveniently execute an application program by means of the smart button 25.

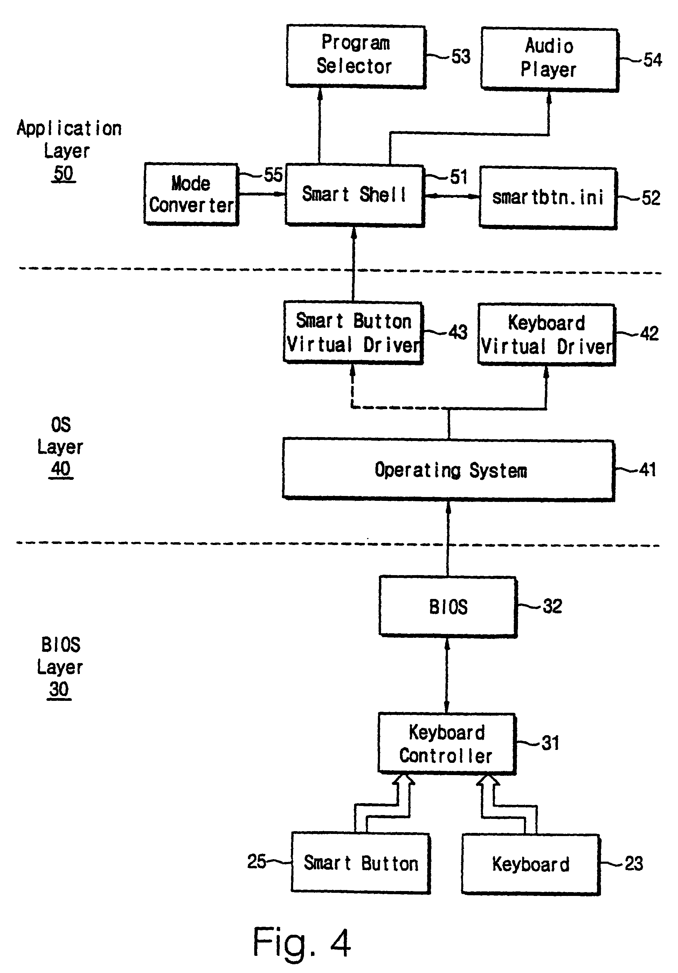

Fig. 4 illustrates the system layer of the computer system shown in Fig. 2. Referring to Fig. 4, a keyboard controller 31 determines whether a key input from the smart button 25 and/or the keyboard device 23. If so, a corresponding interrupt is created to output a corresponding key scan code. Responsive to the interrupt, an interrupt routine for corresponding key input processing is executed. Accordingly, the operating system 41 receives the key input data. The key scan codes created in response to depression of the smart button 25 are different from those used in the current keyboard device, as shown in TABLE 1.

**[TABLE 1]**

| **KEY SCAN CODE** | | |
|---|---|---|
| **BUTTON** | **MAKE DATA** | **BREAK DATA** |
| Left button - LB | 75h | F5h |
| Middle button - MB | 76h | F6h |
| Right button - RB | 77h | F7h |

When the smart buttons 25 are depressed, key scan codes corresponding to the smart buttons 25 are created, as shown in TABLE 1. These key scan codes are not used in the keyboard device. If a user depresses a key of the keyboard device for a predetermined time, the key input data is repeatedly input. This is known as "typematic function". The "typematic rate" is the period with which the key input is repeated and "typematic delay" is the waiting time before the typematic function begins. The usual setting time of the typematic rate is 600 msec and that of the typematic delay is 90 msec.

When key on the keyboard device 23 is depressed, a keyboard virtual driver 42 receives key input data through the operating system 41. When a key on the smart button 25 is depressed, a smart button virtual driver 43 receives key input data through the operating system 41. The smart button virtual driver 43 determines whether the current key input data is input from the keyboard device 23 or the smart button 25. If the latter, the smart button virtual driver 43 supplies the key input data to a smart shell 51. The smart shell 51, which is a shell program for input processing of the smart button 25, receives key input data created by depression of the smart button 25 and then supplies a message corresponding to a current mode to a program selector 53 or a corresponding application program 54. The application program may be an audio player. The program selector 53 (which will be described in more detail hereafter) has the function of executing a selected one of a group of application programs registered in the smart shell window of Fig. 6A.

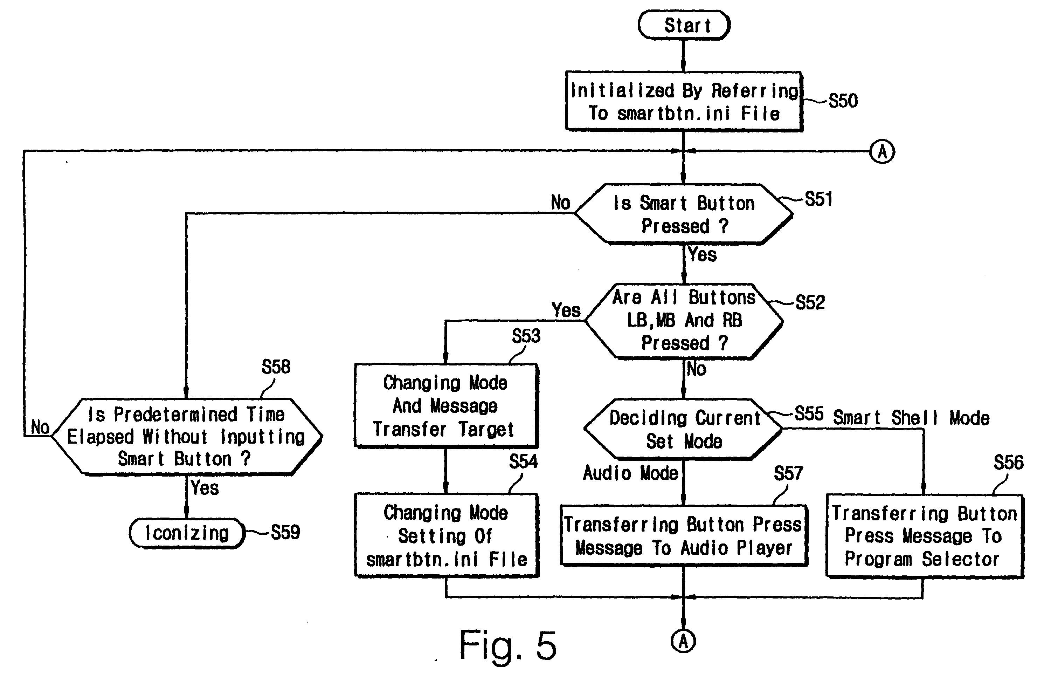

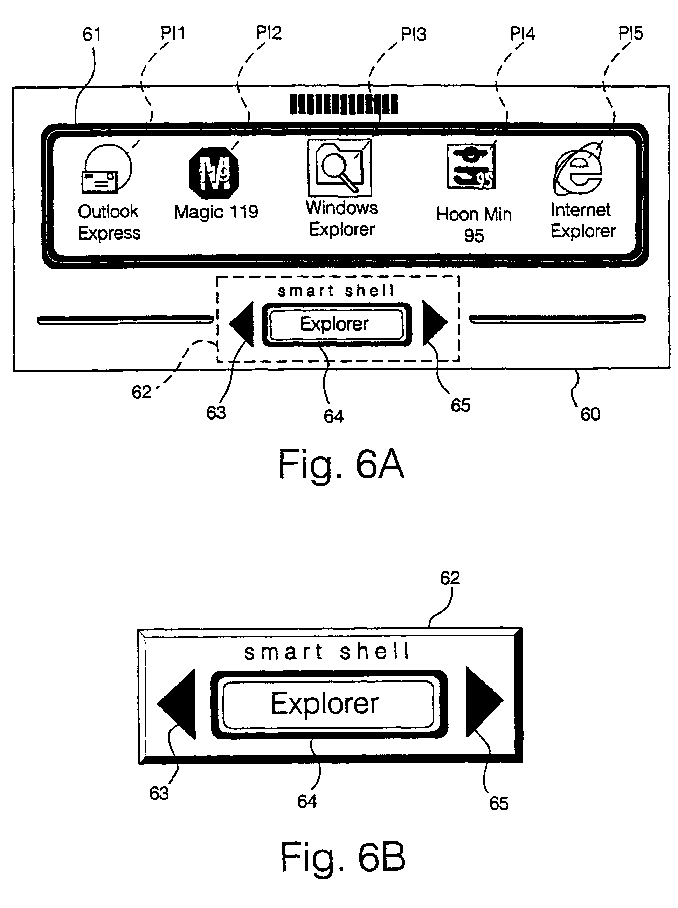

Fig. 5 is a flow chart showing the steps of operating the smart shell shown in Fig. 4 and Figs. 6A-6B illustrate the smart shell window for the computer user interface. Referring to Fig. 5, when the smart shell 51 is driven, in step S50, it is initialised by referring to an initialising file "smartbtn.ini" 52. In this initialising step, as shown in Fig. 6A, the smart shell window 60 for the user interface is displayed on the screen of the display panel 21. The smart shell window 60 has two display areas. One is a program icon display area 61 and the other is a smart button input display area 62. If the smart shell window 60 is minimised, only the smart button input display area 62 is displayed, as shown in Fig. 6B.

Icons P11-P15 of the application programs registered in the current smart shell are displayed in the program icon display area 61. The input status of the smart button 25 is displayed in the smart button input display area 62, in which buttons LB, MB, and RB correspond to reference numbers 63,64 and 65. The program name of the currently selected application program is briefly displayed in a display area 64 of the middle button MB. In the drawings, the display area 64 is displayed as an "Explorer". The currently selected application program is an application program located in the middle of the program icon display area 61.

In step S51, the smart shell 51 determines whether there is a depression of the smart button 25. If there is such a depression, the step S51 proceeds to step S52. In step S52, the smart shell 51 determines whether the depression is a mode conversion command. For example, if the user depresses all the keys LB, MB and RB of the smart button 25, it is interpreted as a mode conversion command. In this case, step S52 proceeds to step S53. In step S53, the mode is converted to change a message transfer target and mode setting of the file "smartbtn.ini" 52. In this embodiment, the smart shell 51 has two kinds of operation modes. One is a "smart shell mode" which can execute an application program by means of the smart button 25. The other is an "audio mode" which can operate an audio player 54 by means of the smart button 25.

If the depression is not a button for mode conversion in step S52, the step S52 proceeds to step S55. In step S55, the invention determines a current set mode. If the mode is set to the smart shell mode, step S55 proceeds to step S56. In step S56, a button press message is transferred to a program selector 53. If the mode is set to the audio mode, step S53 proceeds to step S57. In step S57, the button press message is transferred to an audio player 54.

If the left and right buttons LB and RB are depressed, the program selector 53 scrolls program icons P11-P15 displayed in the program icon display area 61 right and left. Then, icons P11-P15 are displayed. If the middle button MB is pressed, a selected application program is executed. That is, the user can execute a selected program by locating an icon of an application program in the middle and pressing the middle button MB. If the user presses the middle button MB, the application program "Explorer" is executed, as shown in Fig. 6A. If three application programs are registered, one-to-one correspondence between the left button LB, the middle button MB, and the right button RB and the three application programs is made to directly execute a corresponding application program by pressing a button only once.

If there is no depression of a smart button, step S51 proceeds to step S58. In step S58, the invention determines whether a predetermined time has elapsed without depression of a smart button. If so, step S58 proceeds to step S59, any activated smart shell window 60 is iconised or minimised, so as to be inactivated. If the smart button 25 is depressed when the smart shell window is inactive, the smart shell window 60 is restored and activated again and displayed on a screen.

A "drag and drop" function using a mouse device enables an application program to be registered in the smart shell 25. That is, an icon of the application program is dragged and dropped into an application program icon display area 61 of the smart shell window 60 by using a mouse pointer, so that the application program is registered. Further, the application program can be registered therein using a special menu mode.

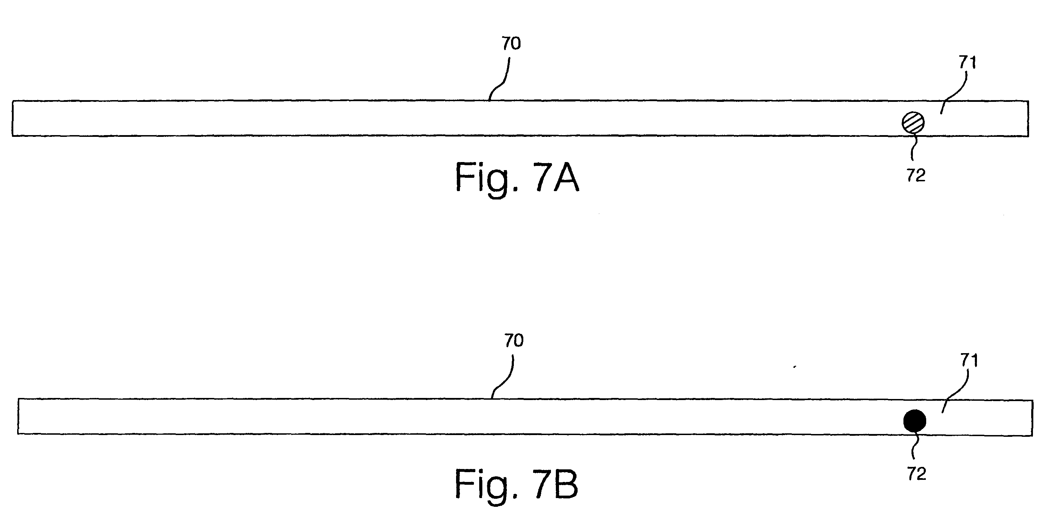

Figs. 7A-7B illustrates a mode display icon, used for changing a smart shell mode into an audio mode displayed in a taskbar notification area. The mode of the smart shell 51 can be changed by means of a special mode converter 55. If the smart shell 51 is driven, a mode display icon 72 displaying, respectively, a smart shell mode and an audio mode is displayed in the taskbar notification area 71 of a taskbar 70, as shown in Figs. 7A-7B. The mode display icon 72 can be displayed with colours which correspond to the modes of the smart shell 51. For example, Fig 7A and 7B show the mode display icon 72 for the smart shell mode and the audio mode respectively. Each of the modes can be displayed with a different mode-dependent icon instead of different colours. The user is able to change mode by locating the pointer of a mouse in the mode display icon 72 and then clicking the left and right buttons of the mouse.

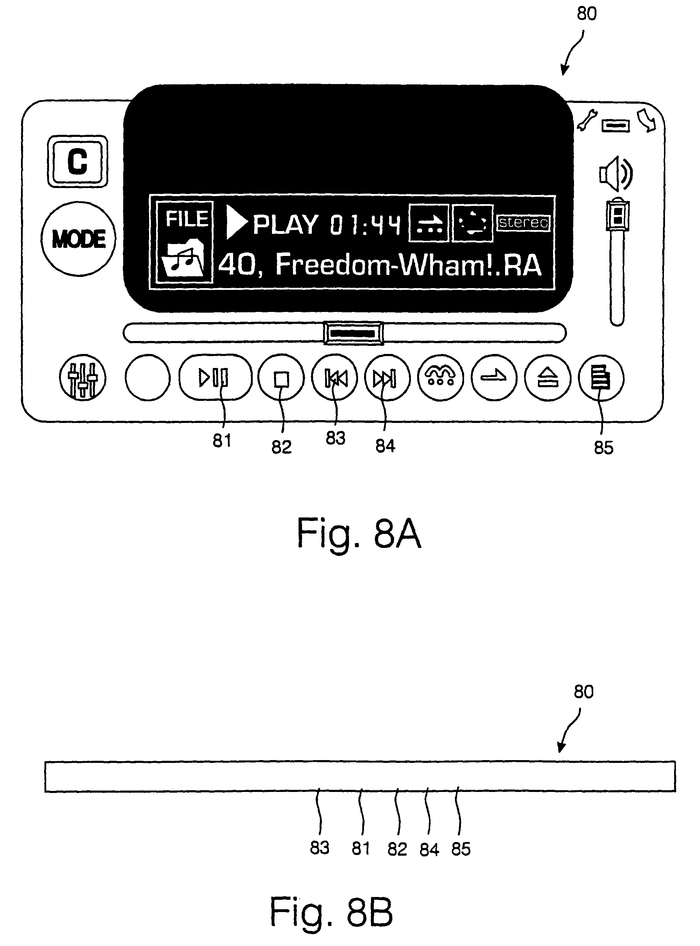

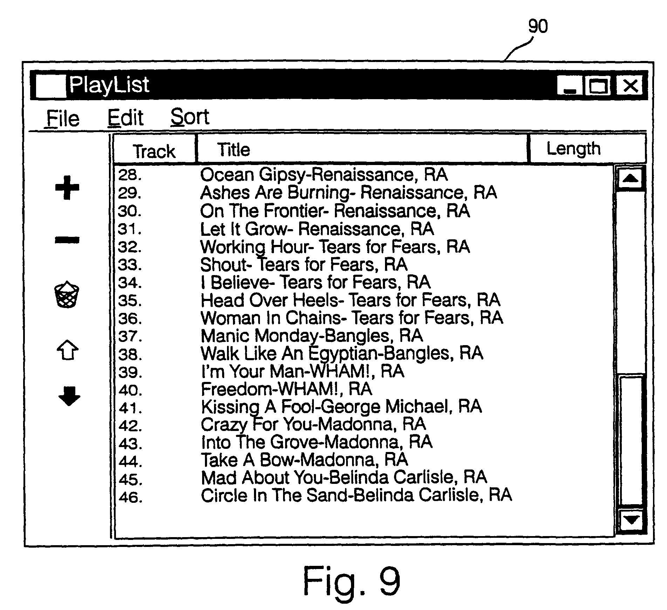

Figs. 8A-8B show an example of a window of an audio player supporting smart buttons and Fig. 9 is an example of an audio album subwindow of an audio player. The audio player 54 can be controlled by using the smart button 25 in the audio mode. Referring to Fig. 8A, if the smart shell 51 is operated in audio mode, an audio player 54 can be operated by the smart button 25. When the audio player is activated, an audio player window 80 is displayed on screen. The audio player window 80 can be minimised, as shown in Fig. 8B. Menu buttons 81, 82, 83 and 84 for audio refresh functions can be selected by using the smart button 25. That is, the selection is possible by mapping the menu buttons 81, 82, 83 and 84 to each of the buttons LB, MB and RB. When a menu button 85 for opening the audio album subwindow is depressed, an audio album subwindow is displayed on screen, as shown in Fig. 9.

The user can conveniently execute application programs using the smart button of the present invention, whereas the user has to select and execute application programs one by one in conventional computers. In particular, the user can register an application program which can be selected by the smart button in a smart shell, this enabling the environment to be adapted to the user. Since an audio player can be easily controlled by using the smart button, the user need not perform troublesome key input steps to control the audio player using the keyboard device or mouse.

## Claims

1. A computer comprising a display, a plurality of input buttons and control means adapted as follows:
in response to a first operation of the input buttons, to display on the display a menu including a plurality of entries; and
to navigate amongst the entries to select a desired entry and to initiate processing of the selected entry in response to a further operation of the input buttons.

2. A computer according to claim 1 in which the menu is displayed by opening a display window in the which the plurality of entries is displayed.

3. A computer according to claim 1 or claim 2 in which the control means is adapted to operate in a first mode in which it always displays the said menu in response to the said first operation of the input buttons.

4. A computer according to any preceding claim in which the control means is adapted to select one of the said plurality of entries when the said menu is displayed.

5. A computer according to any preceding claim in which the said input buttons include:
first and a second buttons, the operation of which causes the control means to navigate amongst the entries to select a desired entry; and
a third button, the operation of which causes the control means to initiate processing of the selected entry.

6. A computer according to claim 5 in which the said first operation of the input buttons comprises simultaneous operation of the said third button and at least one of the first and second buttons.

7. A computer according to claim 6 in which the said first operation of the input buttons comprises simultaneous operation of the said first, second and third buttons.

8. A computer according to any preceding claim in which the initiation of the processing of the selected entry comprises executing a corresponding application.

9. A computer according to any preceding claim in which the control means is adapted to operate in a second mode in which it displays a menu of a selected application in' response to the said first operation of the input buttons.

10. A computer as described herein with reference to and as illustrated in FIGs. 2 et seq. of the accompanying drawings.

11. A computer program which, when run on a suitable computer comprising a display and a plurality of input buttons, causes the computer to operate as follows:
to display on the display a menu including a plurality of entries in response to a first operation of the input buttons; and
to navigate amongst the entries to select a desired entry and to initiate processing of the selected entry in response to a further operation of the input buttons.

12. A computer program which, when run on a suitable computer comprising a display and a plurality of input buttons, causes the computer to be in accordance with any one of claims 1-10.
